# EUROPEAN PATENT SPECIFICATION

(11) **EP 3 457 729 B1**
(45) Date of publication and mention of the grant of the patent: **21.02.2024**
(21) Application number: 17796154.7
(22) Date of filing: 09.05.2017
(51) Int. Cl.: H04W 8/22, H04W 8/24, H04W 72/04, H04L 5/00

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL D'UTILISATEUR, STATION DE BASE SANS FIL ET PROCÉDÉ DE COMMUNICATION SANS FIL

(30) Priority: 10.05.2016 JP 2016094827
(43) Date of publication of application: 20.03.2019
(73) Proprietor: NTT DOCOMO, INC., Chiyoda-ku Tokyo 100-6150 (JP)
(72) Inventor: TAKEDA, Kazuki, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2017/017593
(87) International publication number: WO 2017/195793

(56) References cited:
- EP-A1- 2 996 418
- WO-A1-2017/192232
- WO-A1-2017/196546
- HUAWEI: "Discussion on RAN4 RF issues for SRS switching", 3GPP DRAFT; R4-162321 [SRS] DISCUSSION ON RAN4 RF ISSUES FOR SRS SWITCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG4, no. SAN JOSE DEL CABO, MEXICO; 20160411 - 20160415 1 April 2016 (2016-04-01), XP051084206, Retrieved from the Internet: URL:http://www.3gpp.org/ftp/tsg_ran/WG4_Ra dio/TSGR4_78Bis/Docs/ [retrieved on 2016-04-01]
- NOKIA ET AL: "Discussion on SRS carrier based switching", 3GPP DRAFT; R1-163166, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 1 April 2016 (2016-04-01), XP051079788, Retrieved from the Internet: URL:http://www.3gpp.org/ftp/tsg_ran/WG1_RL 1/TSGR1_84b/Docs/ [retrieved on 2016-04-01]
- HUAWEI ET AL: "General Operation of SRS Carrier Based Switching", 3GPP DRAFT; R1-162585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080273, Retrieved from the Internet: URL:http://www.3gpp.org/ftp/tsg_ran/WG1_RL 1/TSGR1_84b/Docs/ [retrieved on 2016-04-02]
- HUAWEI: "Discussion on RAN4 RF issues for SRS switching", 3GPP TSG-RAN WG4#78bis R4- 162321, 11 April 2016 (2016-04-11), XP051084206, Retrieved from the Internet: URL:http://www.3gpp.org/ftp/ tsg_ran/WG4_Radio/TSGR4_78Bis/Docs/R4-1623 21. zip
- NOKIA: "Discussion on SRS carrier based switching", 3GPP TSG-RAN WG1#84b R1-163166, 11 April 2016 (2016-04-11), XP051079788, Retrieved from the Internet: URL:http:// www.3gpp.org/ftp/tsg_ran/WG1_RL1/TSGR1_84b /Docs/ Rl-163166.zip
- NOKIA: "SRS switching UE capability", 3GPP TSG-RAN WG1#86 R1-167716, 22 August 2016 (2016-08-22), XP051126050, Retrieved from the Internet: URL:http://www.3gpp.org/ftp/tsg-ran/WG1-RL 1/TSGR1-1712/Docs/R1-167716.zip
- SOFTBANK: "Proposals on collision handling for SRS switching", 3GPP TSG-RAN WG1#86 R1-167757, 22 August 2016 (2016-08-22), page 7, XP051143988, Retrieved from the Internet: URL:http://www.3gpp.org/ftp/ tsg_ran/WG1_RL1/TSGR1_1751/Docs/R1-167757. zip

## Description

### Technical Field

The present invention relates to a user terminal, a radio base station and a radio communication method of a next-generation mobile communication system.

### Background Art

In Universal Mobile Telecommunications System (UMTS) networks, for the purpose of higher data rates and low latency, Long Term Evolution (LTE) has been specified (Non-Patent Literature 1). For the purpose of wider bands and a higher speed than LTE (also referred to as LTE Rel. 8 or 9), LTE Advanced (also referred to LTE Rel. 10, 11 or 12) has been specified, and successor systems of LTE (also referred to as Future Radio Access (FRA), the 5th generation mobile communication system (5G), and LTE Rel. 13 and Rel. 14) have been also studied.

LTE Rel. 10/11 have introduced Carrier Aggregation (CA) that aggregates a plurality of Component Carriers (CC) to obtain a wider band. A system band of LTE Rel. 8 is one unit that composes each CC. Further, according to CA, a plurality of CCs of the same radio base station (eNB: eNodeB) is set to a user terminal (UE: User Equipment).

On the other hand, LTE Rel. 12 has introduced Dual Connectivity (DC), too, that sets a plurality of Cell Groups (CG) of different radio base stations to UEs. Each cell group includes at least one cell (CC). DC aggregates a plurality of CCs of the different radio base stations. Therefore, DC is also referred to as inter-base station CA (Inter-eNB CA).

Further, LTE Rel. 8 to 12 have introduced Frequency Division Duplex (FDD) that performs DownLink (DL) transmission and UpLink (UL) transmission in different frequency bands, and Time Division Duplex (TDD) that temporarily switches between and performs downlink transmission and uplink transmission in the same frequency band. According to TDD, whether each subframe is used for UpLink (UL) or DownLink (DL) is strictly defined based on a UL-DL configuration.

According to TDD, Beam Forming (BF) that takes advantage of channel reciprocity is effective. In this case, when CCs supported by DownLink-Carrier Aggregation (DL-CA) and CCs supported by UpLink-Carrier Aggregation (UL-CA) are non-reciprocal according to CA, there is a situation that part of CCs cannot transmit desired signals (e.g., reference signals) from user terminals. Therefore, in recent years, a technique of temporarily switching a frequency and performing uplink transmission by using other carriers has been studied.
Patent Literature 1 relates to a carrier switching method, a base station, and user equipment, where the method includes: determining, according to carrier switching capability information of user equipment UE, a carrier switching policy according to which the UE performs carrier switching; and sending carrier switching indication information to the UE, where the carrier switching indication information is used for indicating the carrier switching policy, so that the UE performs carrier switching according to the carrier switching policy.
Patent Literature 2 relates to an apparatus using inactive uplink portions of a downlink component carrier to transmit SRS to a base station to address possible collisions between the SRS transmission and uplink transmissions or downlink transmissions on another component carrier.
Patent Literature 3 relates to the provision of procedures for handling interruption due to carrier switching for sounding reference signal transmission and for a carrier switching capability indication.
Non-Patent Literature 2 relates to SRS switching to and between different TDD UL carriers and particularly to feasible CA scenarios and switching time of RF components.
Non-Patent Literature 3 relates to factors impacting the SRS switching.
Non-Patent Literature 4 relates to the general operation of SRS carrier based switching.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"
Non-Patent Literature 2: HUAWEI: "Discussion on RAN4 RF issues for SRS switching", 3GPP DRAFT; R4-162321 [SRS] DISCUSSION ON RAN4 RF ISSUES FOR SRS SWITCHING, 3RD GENERATION PARTNERSHIP PROJECT, 1 April 2016
Non-Patent Literature 3: NOKIA ET AL: "Discussion on SRS carrier based switching", 3GPP DRAFT; R1-163166, 1 April 2016
Non-Patent Literature 4: HUAWEI ET AL: "General Operation of SRS Carrier Based Switching", 3GPP DRAFT; R1-162585, 2 April 2016
Patent Literature 1: EP 2 996 418 A1
Patent Literature 2: WO 2017/192232 A1
Patent Literature 3: WO 2017/196546 A1

### Summary of the Invention

### Technical Problem

Future radio communication systems (e.g., 5G and New Radio (NR)) are expected to realize various radio communication services while meeting different request conditions (e.g., an ultra high speed, a large volume and ultra low latency).

For example, it has been studied that 5G provides radio communication services called enhanced Mobile Broad Band (eMBB), Internet of Things (IoT), Machine Type Communication (MTC), Machine To Machine (M2M), and Ultra Reliable and Low Latency Communications (URLLC). In addition, M2M may be called Device To Device (D2D) and Vehicular To Vehicular (V2V) depending on devices that perform communication. In order to meet requests for the various types of communication, it has been studied to design a new communication access scheme (New Radio Access Technology (New RAT)).

It has been studied for 5G to provide service by using a very high carrier frequency such as 100 GHz. Instead of FDD that is mainly applied to existing frequencies, it has been studied to apply TDD to such a high carrier frequency. However, when the above temporary frequency switching technique, i.e., a technique of temporarily switching the frequency and thereby performing uplink transmission by using other carriers is used by TDD, a time required to switch the frequency is assumed to become long. In such a case, a waveform of a switch source carrier (CC) is disturbed, and a signal quality and/or configuration of a subframe of the switch source carrier are influenced. As a result, it is concerned that a sufficient throughput cannot be achieved.

The present invention has been made in light such a problem. An object of the present invention is to provide a user terminal, a radio base station and a radio communication method that can achieve a sufficient throughput even when a temporary frequency switching technique is used by TDD.

### Solution to Problem

The object of the present invention is achieved by the subject-matter of the appended independent claims. Advantageous embodiments are defined in the dependent claims. Further examples are provided for facilitating the understanding of the invention.

### Technical advantage of the Invention

According to the present invention, even when a temporary frequency switching technique is used by TDD, it is possible to achieve a sufficient throughput.

### Brief Description of the Drawings

Fig. 1 is a diagram illustrating that CCs supported by DL-CA and CCs supported by UL-CA are non-reciprocal.
Fig. 2 is a diagram for explaining an example of Sounding Reference Signal (SRS) switching (SRS carrier based switching).
Fig. 3 is a diagram for explaining that a quality and/or a configuration of a subframe in a switching source CC of the SRS switching are influenced.
Fig. 4 is a diagram for explaining an SRS switching operation specified in a case 1 according to one embodiment.
Figs. 5A and 5B are diagrams for explaining the SRS switching operation specified in a case 2 according to the one embodiment.
Fig. 6 is a diagram for explaining the SRS switching operation specified in a case 3 according to the one embodiment.
Figs. 7A and 7B are diagrams for explaining an application example of the SRS switching operation in the case 3.
Figs. 8A and 8B are diagrams for explaining an application example of the SRS switching operation in the case 3.
Fig. 9 is a diagram illustrating an example of a schematic configuration of a radio communication system according to the present embodiment.
Fig. 10 is a diagram illustrating an example of an entire configuration of a radio base station according to the present embodiment.
Fig. 11 is a diagram illustrating an example of a function configuration of the radio base station according to the present embodiment.
Fig. 12 is a diagram illustrating an example of an entire configuration of a user terminal according to the present embodiment.
Fig. 13 is a diagram illustrating an example of a function configuration of the user terminal according to the present embodiment.
Fig. 14 is a diagram illustrating an example of hardware configurations of the radio base station and the user terminal according to the present embodiment.

### Description of Embodiments

According to TDD, beam forming that uses channel reciprocity is effective. According to this beam forming, a radio base station estimates a channel state based on a known reference signal (such as a pilot signal or an SRS) transmitted by a user terminal. When, for example, a plurality of CCs are used on downlink, the user terminal transmits a reference signal per CC. Consequently, the radio base station can estimate a channel state (channel information) of each CC. The radio base station applies beam forming (or precoding) based on the estimated channel state, and transmits a signal addressed to the user terminal on a downlink channel.

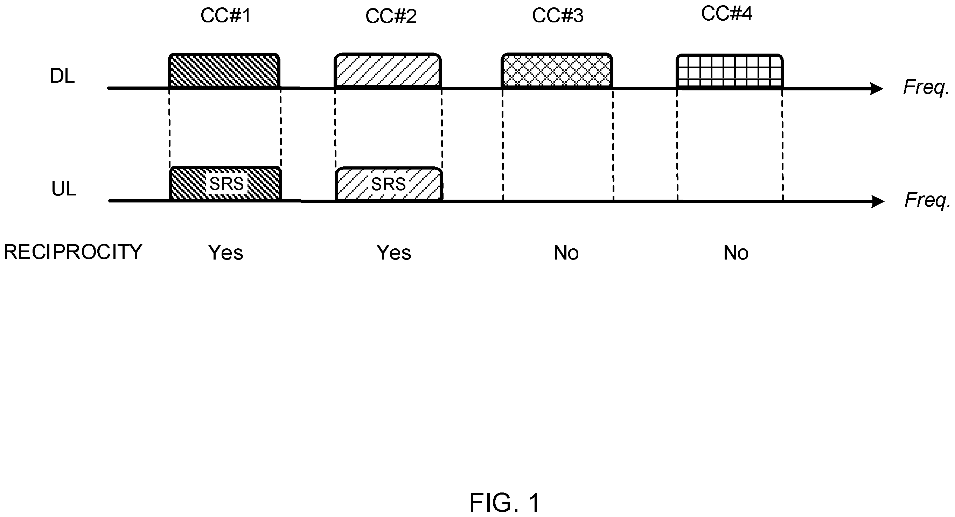

Meanwhile, as described above, according to CA, CCs supported by DL-CA and CCs supported by UL-CA become non-reciprocal in some cases. Generally, implementation complexity and a downlink traffic of a user terminal tend to increase compared to uplink. Therefore, the number of CCs supported by DL-CA is larger than the number of CCs supported by UL-CA (the number of carriers on downlink is larger). Fig. 1 illustrates an example of such non-reciprocity. In Fig. 1, DL-CA supports four CCs of a CC #1 to a CC #4. Meanwhile, UL-CA supports two CCs of the CC #1 and the CC #2, and is non-reciprocal with the CCs supported by DL-CA. In addition, the "non-reciprocity" includes a case where the number of CCs supported by DL-CA and the number of CCs supported by UL-CA are different as described. Alternatively, a case where a total bandwidth of CCs supported by DL-CA and a total bandwidth of CCs supported by UL-CA may be referred to as the "non-reciprocity". However, the "non-reciprocity" is not limited to this, and includes a case where the numbers of CCs are the same yet CCs that are different between DL and UL are used (a case where SCells are different), too.

In such a case, a (Non-CA) user terminal that does not support CA can communicate with a radio base station by setting a Non-CA carrier, i.e., a single carrier to one of the CC #1 and the CC #2. More specifically, the user terminal can receive a downlink signal transmitted from the radio base station in the set CC (the CC #1 or the CC #2), and transmit a reference signal for estimating a channel state in the same CC to the radio base station.

According to CA, while the user terminal can receive a downlink signal transmitted from the radio base station in the CC #1 to the CC #4, the user terminal can transmit a reference signal only in two CCs of the CC #1 and the CC #2. Therefore, the radio base station can estimate channel states of only the CC #1 and the CC #2, and cannot estimate channel states of the other CCs (the CC #3 and the CC #4). Therefore, beam forming cannot be effectively applied to transmission of downlink signals that uses the CC #1 to the CC #4.

When the CCs supported by DL-CA and the CCs supported by UL-CA are reciprocal (match), the user terminal can transmit reference signals in all CCs used to receive downlink signals, so that beam forming is applicable.

On the other hand, SRS carrier based switching (SRS switching) that is a function of temporarily stopping a carrier used for uplink transmission, switching the frequency and thereby switching the carrier to another carrier has been studied. Such a function supports transmission of reference signals (SRSs) in uplink CCs that do not have capability of UL-CA. In this regard, transmission of data other than an SRS is desirably performed by using a carrier such as a PCell that guarantees uplink transmission. Further, the user terminal cannot concurrently transmit UL signals in a plurality of CCs. Therefore, SRS transmission in an SRS switching destination CC is set not to be performed concurrently with transmission from the other CCs.

SRS switching retunes a transmission frequency of a transmitter of the user terminal, and realizes uplink transmission in the switching destination CC.

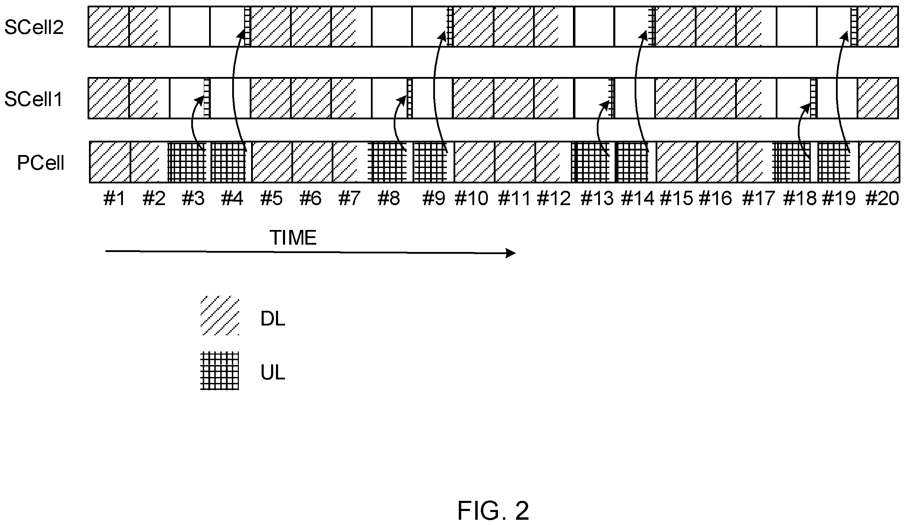

The SRS switching will be more specifically described with reference to Fig. 2. Fig. 2 illustrates an operation example of the user terminal that supports three CCs of DL-CA yet does not have capability of UL-CA. Fig. 2 assumes a UL-DL configuration #1 in all carriers (Cells).

In a subframe #3 (#8, #13 and #18), the SRS switching is performed to transmit an SRS in an SCell 1. Further, in a subframe #4 (#9, #14 and #19), the SRS switching is performed to transmit an SRS in an SCell 2. Consequently, it is possible to transmit the SRS in a CC (carrier) that is not used to receive downlink transmission data.

To perform the above SRS switching, the transmitter of the user terminal needs to perform transmission frequency switch processing. Such switch processing causes a waveform disturbance of an SRS switching source carrier. Further, a time (including RF retuning) taken to switch the transmission frequency fluctuates depending on implementation of the user terminal and a frequency relative relationship between the switching source CC and the switching destination CC.

For example, times taken to perform the RF retuning processing are likely to become different between Intra-band CA (CA in a band) and Inter-band CA (CA between bands). Intra-band CA is considered to perform transmission frequency switch processing between neighboring carriers in the same bandwidth (in a band), and therefore is likely to be able to perform switching relatively easily. On the other hand, Inter-band CA is assumed to perform processing between carriers of completely different frequencies (between, for example, a carrier of 2.6 GHz and a carrier of 3.5 GHz), and therefore is highly likely to take a long time to switch the transmission frequency.

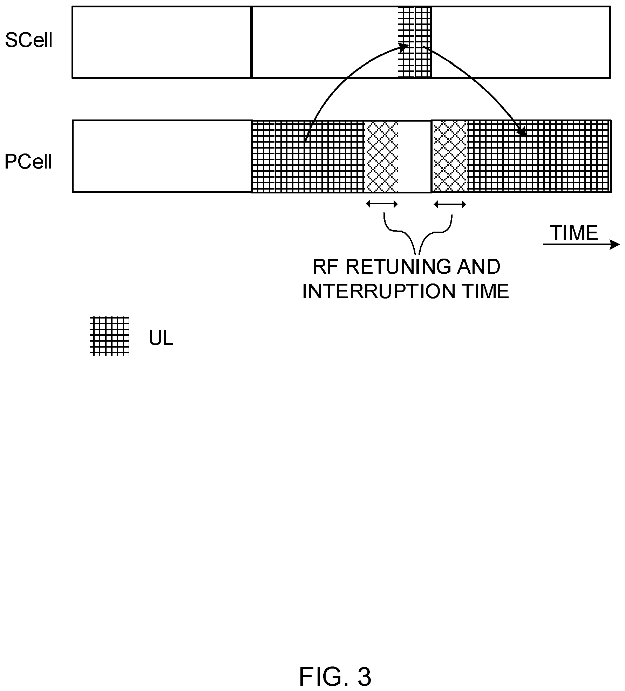

When the time taken to perform the transmission frequency switch processing becomes long, the waveform disturbance of the switch source carrier becomes significant, and this disturbance influences a signal quality and/or configuration of a subframe in the same carrier. As illustrated in, for example, Fig. 3, an increase in the time taken to perform the transmission frequency switch processing means an increase in a time (RF retuning and interruption time) during which transmission is not performed. As a result, the signal quality and/or configuration of the subframe of the switch source carrier (PCell) are influenced.

In view of the above, the inventors of the invention have arrived at the present invention by focusing on that, by specifying an SRS switching operation of the user terminal, it is possible to suppress an influence on the signal quality and/or configuration of the subframe in the switch source carrier. Further, the inventors of the invention have focused on that, by notifying a network of the SRS switching operation (capability information) matching capability of the user terminal, it is also possible to achieve a sufficient throughput between the user terminal and the network, too.

One embodiment of the present invention will be described in detail below with reference to the drawings.

First, the present embodiment specifies the SRS switching operation of the user terminal as a plurality of operations, and classifies the specified operations into following three cases.

### [Case 1]

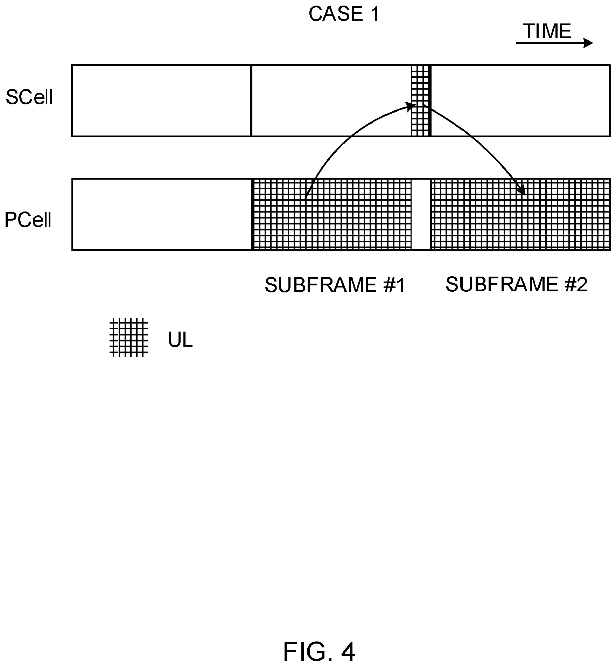

As illustrated in Fig. 4, for a PCell (switching source carrier), an operation of performing SRS between UL and UL is specified. That is, the PCell performs SRS switching to transmit an SRS from an SCell (a carrier that cannot concurrently perform UL transmission) in a last symbol of the same subframe while performing UL transmission (such as data) in a subframe #1. After the SCell transmits the SRS, a transmission frequency is switched to the PCell again to perform UL transmission in a subframe #2. In this case, in other cases, while the PCell transmits the UL data, the SCell temporarily transmits the UL signal.

However, this case is concerned to influence the signal quality and/or configuration of the subframe of the switch source carrier (PCell) when the time (the RF retuning and interruption time) taken to perform the transmission frequency switch processing becomes long as described with reference to Fig. 3.

### [Case 2]

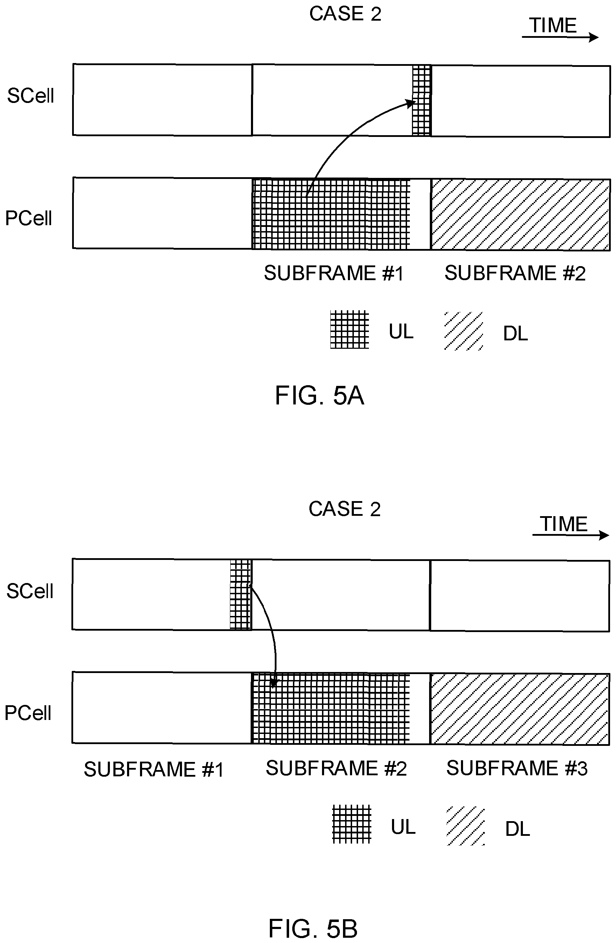

In the case 2, two SRS switching operations are specified. The first operation performs SRS switching between UL and DL as illustrated in Fig. 5A. That is, while the PCell performs SRS switching to transmit an SRS from the SCell in the last symbol of the same subframe while performing UL transmission in the subframe #1. The PCell performs DL reception processing in the subframe #2 subsequent to the subframe #1. In such a case, after the PCell transmits the UL signal (data), the SCell transmits the SRS.

According to this SRS switching operation, the transmitter of the user terminal performs processing of switching the transmission frequency from the PCell to the SCell, yet does not need to perform the processing of switching the transmission frequency from the SCell to the PCell. Hence, even when the RF retuning and interruption time becomes long, it is possible to suppress the influence of a waveform disturbance only in the subframe #1. Consequently, it is possible to prevent the influence on the signal quality and/or configuration of the subframe #2.

The second operation specified in the case 2 performs SRS switching between GP and UL as illustrated in Fig. 5B. The subframe #1 of the PCell illustrated in Fig. 5B is a subframe, i.e., a special subframe that prevents an interference upon switching from DL to UL. In this regard, a Guard Interval (GP) is appropriately adjusted to transmit an SRS from the SCell in the last symbol of the subframe #1. Subsequently, the transmission frequency switch processing is performed to perform UL transmission in the subframe #2 of the PCell. In addition, in Fig. 5B, in the subframe #3 subsequent to the subframe #2, DL reception processing is performed. In this case, prior to transmission of the UL data of the PCell, the SCell transmits the SRS.

According to this SRS switching operation, the transmitter of the user terminal performs processing of switching the transmission frequency from the SCell to the PCell, yet does not need to perform processing of switching the transmission frequency from the PCell to the SCell. Consequently, even when the RF retuning and interruption time becomes long, it is possible to suppress the influence of the waveform disturbance only in the subframe #1. Consequently, it is possible to prevent the influence on the signal quality and/or configuration of the subframe #2. Further, a portion immediately before the SRS is transmitted in a subframe #0 corresponds to a GP of a special subframe, and therefore does not influence the signal quality and/or configuration of the PCell.

### [Case 3]

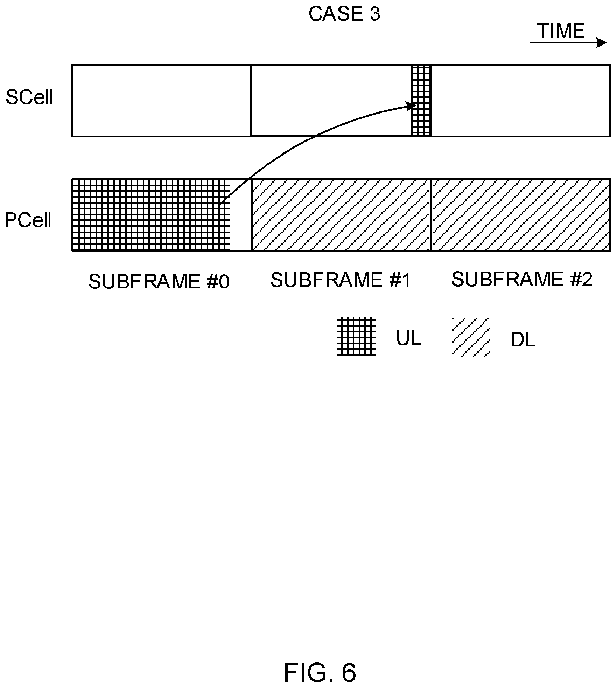

An SRS switching operation specified in the case 3 performs SRS switching between DL and DL as illustrated in Fig. 6. As illustrated in Fig. 6, the SCell transmits an SRS between the subframes #1 and #2 in which the PCell performs DL reception processing, i.e., by the last symbol of the subframe #1. The operation specified in this way can take a sufficiently long interruption time. In this case, while the PCell receives a DL signal (during reception), the SCell transmits the SRS.

Further, the case 3 assumes different TDD UL-DL configurations between a switching destination carrier and a switching source carrier. Hence, while the switching destination carrier transmits an SRS, the switching source carrier receives a downlink signal. Consequently, it is possible to prevent occurrence of a waveform disturbance in the switching source carrier.

Basically, TDD does not concurrently perform transmission and reception. On the other hand, Rel. 11 includes that, when at least two types of TDD are performed in different bands, a UE that can concurrently perform transmission and reception can perform CA on two carriers configured by different UL-DL configurations. That is, transmission and reception may be concurrently performed in the different bands. Consequently, the case 3 can be realized when the switching source carrier and the switching destination carrier are different bands.

More specifically, a user terminal that supports the case 3 includes at least two receivers and one transmitter. Consequently, the user terminal can support CA on downlink and transmit an SRS in the switching destination carrier. However, a device needs to be made to apply TDD when TDD is performed in the same band.

As described above, by specifying the SRS switching operation, it is possible to suppress an influence on the signal quality and configuration of subframes in the switching source carrier. For example, in the case 2, UL transmission is not performed before or after interruption in the switching source carrier. Therefore, even when a waveform disturbance occurs, the waveform disturbance occurs only on a side that performs UL transmission. Consequently, even when the waveform disturbance occurs, it is possible to suppress the influence of the waveform disturbance.

Further, in the case 3, while the switching destination carrier transmits the SRS, the switching source carrier receives a downlink signal. Consequently, it is possible to prevent occurrence of the waveform disturbance in the switching source carrier.

Whether or not the above cases 1 to 3 are supported depends on a function of the user terminal. Therefore, the user terminal preferably notifies a network (such as a radio base station) of which one of the three cases the user terminal supports as UE capability of the user terminal. More specifically, the following three notification methods are applicable.

### (Notification Method 1)

The user terminal individually (independently) notifies the network of capability of the cases 1 to 3. This notification method can signal the capability of the appropriate case according to implementation.

### (Notification Method 2)

The user terminal that notifies that the case 1 supports the cases 2 and 3, too. The user terminal that notifies that the case 2 is supported may be set to support the case 3, too. In this case, when capability signaling of the case 1 is "TRUE", the cases 2 and 3 are also true. When capability signaling of the case 2 is "TRUE", the case 3 is also "TRUE". Thus, all capability signaling does not need to be independently included in {TRUE, FALSE}, so that it is possible to reduce signaling bits.

### (Notification Method 3)

The case 3 may be assumed to be supported without a capability bit. However, the case 3 may be limited to a CA band combination of Inter-band CA. As described above, the case 3 can be realized when the switching source carrier and the switching destination carrier are the different bands, and is limited to the CA band combination of Inter-band CA. The case 3 occurs in a case of only different TDD UL-DL configurations. In other words, the case 3 occurs when the switching source carrier is DL heavy, and the switching destination carrier is UL heavy.

Further, the user terminal reports to the network in advance which one of the SRS switching operations specified by the three types of the cases is supported. Furthermore, the capability bit indicating this report may be specified per combination of the SRS switching source carrier and the SRS switching destination carrier. Still further, the source carrier and the destination carrier may be both limited to carriers that can be subjected to DL-CA.

The network can appropriately transmit an SRS only in the case supported by the user terminal according to capability information reported from the user terminal. In addition, an SRS setting may not be made per above case.

As described above, according to the present embodiment, by notifying the network of the switching operation according to the capability of the user terminal, it is possible to achieve a sufficient throughput between the terminal and the network.

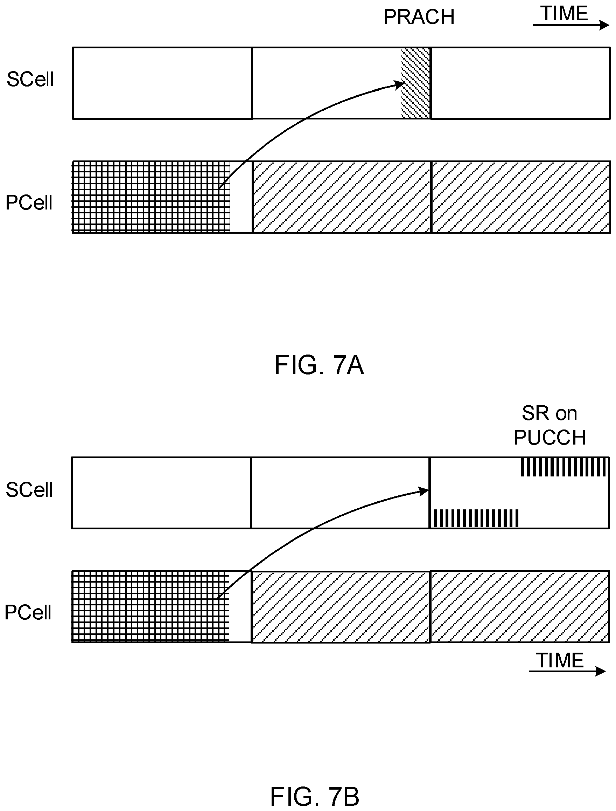

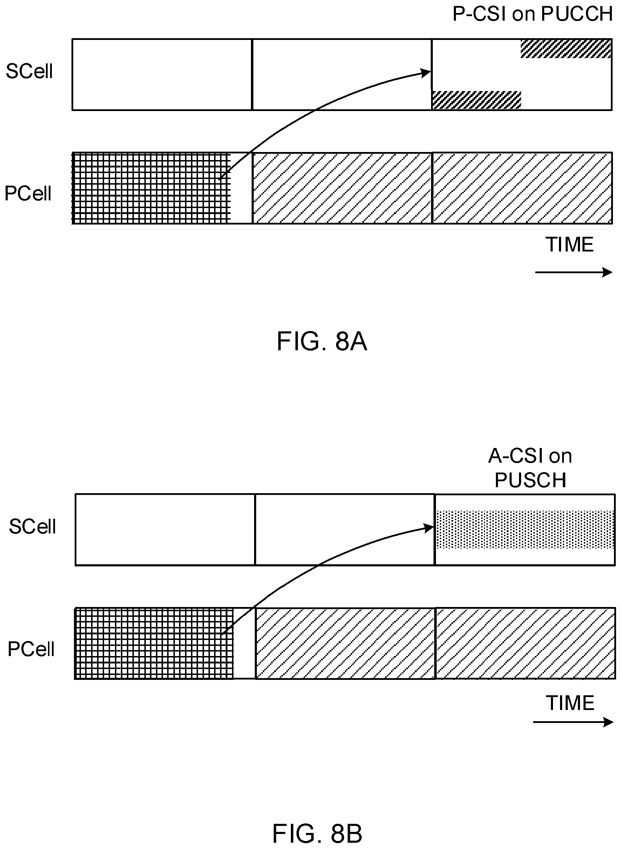

Next, an application example of the SRS switching operation specified in the case 3 will be described with reference to Figs. 7 and 8.

The case 3 can secure a sufficient interruption time, and therefore is considered to be used to transmit signals other than the SRS. In, for example, Fig. 7A, a PRACH is transmitted from the SCell. Rel. 8 specifies for this PRACH a short PRACH format that uses two symbols of a TDD special subframe. In Fig. 7A, the PRACH can be transmitted by using this short PRACH format.

Fig. 7B illustrates an operation of transmitting a Scheduling Request (SR) on a PUCCH. Fig. 8A illustrates an operation of transmitting a Periodic CSI (P-CSI) on the PUCCH. Fig. 8B illustrates an operation of transmitting an Aperiodic CSI (A-CSI) on the PUSCH.

According to the application examples illustrated in Figs. 7 and 8, by sufficiently securing an interruption time, it is possible to use another carrier to transmit various pieces of information, and achieve a sufficient throughput. By enabling a terminal that does not support UL-CA to transmit the PRACH in the SCell as in Fig. 7, it is possible to synchronize an uplink timing in the SCell that transmits only the SRS, so that it is possible to optimize an SRS transmission timing. Further, by enabling the terminal to transmit the Scheduling Request (SR), it is possible to increase frequencies of resources that can transmit the Scheduling Request (SR), and improve an uplink throughput. By enabling the terminal that does not support UL-CA to transmit the Periodic CSI (P-CSI) or the Aperiodic CSI (A-CSI) in the SCell, it is possible to use uplink resources of the SCell to transmit control information, so that it is possible to improve uplink resource efficiency of the PCell.

### (Radio Communication System)

The configuration of the radio communication system according to one embodiment of the present invention will be described below. This radio communication system uses one or a combination of the radio communication methods according to the above embodiment of the present invention to perform communication.

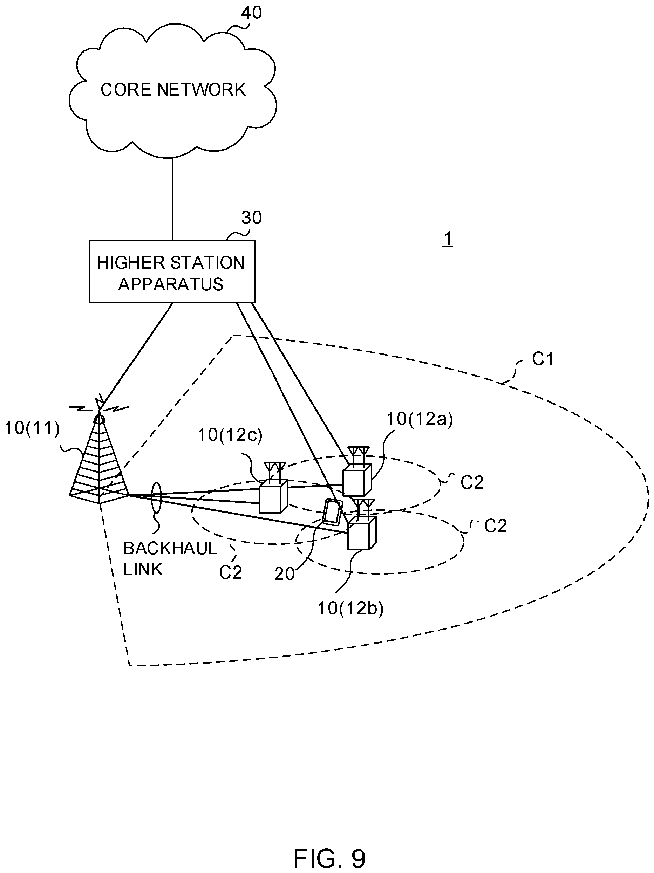

Fig. 9 is a diagram illustrating an example of a schematic configuration of the radio communication system according to the one embodiment of the present invention. A radio communication system 1 can apply Carrier Aggregation (CA) that aggregates a plurality of base frequency blocks (component carriers) whose one unit is a system bandwidth (e.g., 20 MHz) of the LTE system, and/or Dual Connectivity (DC).

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA) and New Radio Access Technology (New-RAT), or a system that realizes these.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Further, a user terminal 20 is located in the macro cell C1 and each small cell C2.

The user terminal 20 can connect with both of the radio base station 11 and the radio base stations 12. The user terminal 20 is assumed to concurrently use the macro cell C1 and the small cells C2 by CA or DC. Further, the user terminal 20 can apply CA or DC by using a plurality of cells (CCs) (e.g., five CCs or less or six CCs or more).

The user terminal 20 and the radio base station 11 can communicate by using a carrier (an existing carrier that is called a Legacy carrier) of a narrow bandwidth in a relatively low frequency band (e.g., 2 GHz). Meanwhile, the user terminal 20 and each radio base station 12 may use a carrier of a wide bandwidth in a relatively high frequency band (e.g., 3.5 GHz or 5 GHz) or may use the same carrier as that used by the radio base station 11. In this regard, a configuration of the frequency band used by each radio base station is not limited to this.

The radio base station 11 and each radio base station 12 (or the two radio base stations 12) can be configured to be connected by cables (e.g., optical fibers compliant with a Common Public Radio Interface (CPRI) or an X2 interface) or by radio.

The radio base station 11 and each radio base station 12 are respectively connected with a higher station apparatus 30 and are connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Further, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Further, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and Single Carrier Frequency Division Multiple Access (SC-FDMA) to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or continuous resource blocks per terminal and causes a plurality of terminals to use different bands to reduce an interference between the terminals. In this regard, uplink and downlink radio access schemes are not limited to a combination of these and may be other radio access schemes.

The radio communication system 1 uses as downlink channels a downlink shared channel (PDSCH: Physical Downlink Shared Channel) shared by each user terminal 20, a broadcast channel (PBCH: Physical Broadcast Channel) and a downlink L1/L2 control channel. User data, higher layer control information and System Information Blocks (SIB) are transmitted on the PDSCH. Further, Master Information Blocks (MIB) are transmitted on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH) and a Physical Hybrid-ARQ Indicator Channel (PHICH). Downlink Control Information (DCI) including scheduling information of the PDSCH and the PUSCH is transmitted on the PDCCH. The number of OFDM symbols used for the PDCCH is transmitted on the PCFICH. Transmission acknowledgement information (also referred to as, for example, retransmission control information, HARQ-ACK or ACK/NACK) of a Hybrid Automatic Repeat reQuest (HARQ) for the PUSCH is transmitted on the PHICH. The EPDCCH is subjected to frequency division multiplexing with the PDSCH (downlink shared data channel) and is used to transmit DCI similar to the PDCCH.

The radio communication system 1 uses as uplink channels an uplink shared channel (PUSCH: Physical Uplink Shared Channel) shared by each user terminal 20, an uplink control channel (PUCCH: Physical Uplink Control Channel), and a random access channel (PRACH: Physical Random Access Channel). User data and higher layer control information are transmitted on the PUSCH. Further, downlink radio quality information (CQI: Channel Quality Indicator) and transmission acknowledgement information are transmitted on the PUCCH. A random access preamble for establishing connection with cells is transmitted on the PRACH.

The radio communication system 1 transmits as downlink reference signals a Cell-specific Reference Signal (CRS), a Channel State Information-Reference Signal (CSI-RS), a DeModulation Reference Signal (DMRS) and a Positioning Reference Signal (PRS). Further, the radio communication system 1 transmits a measurement reference signal (SRS: Sounding Reference Signal) and a DeModulation Reference Signal (DMRS) as uplink reference signals. In this regard, the DMRS may be referred to as a user terminal specific reference signal (UE-specific Reference Signal). Further, a reference signal to be transmitted is not limited to these.

### (Radio Base Station)

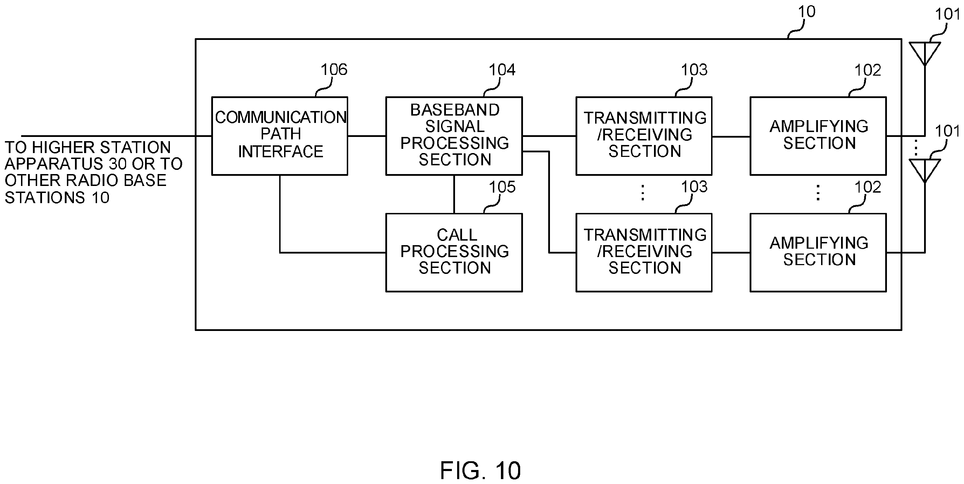

Fig. 10 is a diagram illustrating an example of an entire configuration of the radio base station according to the one embodiment of the present invention. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of an RLC layer such as Radio Link Control (RLC) retransmission control, Medium Access Control (MAC) retransmission control (such as HARQ transmission processing), and transmission processing such as scheduling, transmission format selection, channel coding, Inverse Fast Fourier Transform (IFFT) processing, and precoding processing on the user data to transfer to each transmission/reception section 103. Further, the baseband signal processing section 104 performs transmission processing such as channel coding and inverse fast Fourier transform on a downlink control signal, too, to transfer to each transmission/reception section 103.

Each transmission/reception section 103 converts a baseband signal precoded and output per antenna from the baseband signal processing section 104 into a radio frequency band to transmit. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal as an uplink signal received by each transmission/reception antenna 101. Each transmission/reception section 103 receives the uplink signal amplified by each amplifying section 102. Each transmission/reception section 103 performs frequency conversion on the received signal into a baseband signal to output to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on user data included in the input uplink signal to transfer to the higher station apparatus 30 via the channel interface 106. The call processing section 105 performs call processing such as configuration and release of a communication channel, state management of the radio base station 10, and radio resource management.

The channel interface 106 transmits and receives signals to and from the higher station apparatus 30 via a predetermined interface. Further, the channel interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmission/reception section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Further, each transmission/reception antenna 101 can be composed of an array antenna, for example.

Each transmission/reception section 103 may receive the SRS transmitted according to one of the above cases 1 to 3. Further, each transmission/reception section 103 may receive information (capability information) related to the case supported by the user terminal 20 among the case 1 to the case 3. In this case, each transmission/reception section 103 may receive the capability information according to the notification methods 1 to 3. Further, each transmission/reception section 103 may transmit an SRS transmission timing decided based on the received capability information to the user terminal. Furthermore, each transmission/reception section 103 may receive at least one of the Scheduling Request (SR), the CSI (the P-CSI or the A-CSI) and information for a random access transmitted according to the application example of the case 3.

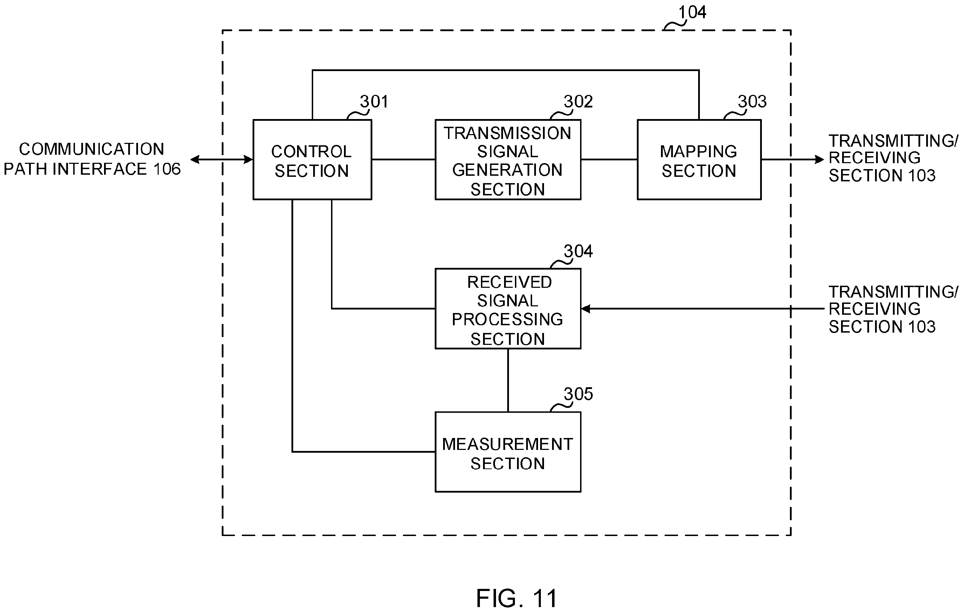

Fig. 11 is a diagram illustrating an example of a function configuration of the radio base station according to the one embodiment of the present invention. In addition, this example mainly illustrates function blocks of characteristic portions according to the present embodiment, and assumes that the radio base station 10 includes other function blocks required for radio communication, too.

The baseband signal processing section 104 includes at least a control section (scheduler) 301, a transmission signal generating section 302, a mapping section 303, a received signal processing section 304 and a measurement section 305. In addition, these components may be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Further, the control section 301 controls signal reception processing of the received signal processing section 304 and signal measurement of the measurement section 305.

The control section 301 controls scheduling (e.g., resource allocation) of system information, a downlink data signal transmitted on the PDSCH, and a downlink control signal transmitted on the PDCCH and/or the EPDCCH. Further, the control section 301 controls generation of a downlink control signal (e.g., transmission acknowledgement information) and a downlink data signal based on a result obtained by determining whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals such as a CRS, a CSI-RS and a DMRS.

Still further, the control section 301 controls scheduling of an uplink data signal transmitted on the PUSCH, an uplink control signal (e.g., transmission acknowledgement information) transmitted on the PUCCH and/or the PUSCH, a random access preamble transmitted on the PRACH and an uplink reference signal.

The control section 301 may estimate a carrier state based on the SRS transmitted according to one of the above cases 1 to 3. Further, the control section 301 may decide an SRS transmission timing according to information (capability information) related to the case supported by the user terminal 20 among the case 1 to the case 3. Furthermore, the control section 301 may notify the user terminal 20 of this decision via each transmission/reception section 103.

Still further, the control section 301 may perform processing based on at least one of the Scheduling Request (SR), the CSI (the P-CSI or the A-CSI) and the information for the random access received by each transmission/reception section 103 (the application example of the case 3).

The transmission signal generating section 302 generates downlink signals (such as a downlink control signal, a downlink data signal and a downlink reference signal) based on an instruction from the control section 301 to output to the mapping section 303. The transmission signal generating section 302 can be composed of a signal generator, a signal generation circuit and a signal generating apparatus described based on the common knowledge in the technical field according to the present invention.

The transmission signal generating section 302 generates, for example, a DL assignment for notifying downlink signal allocation information, and a UL grant for notifying uplink signal allocation information based on the instruction from the control section 301. Further, the transmission signal generating section 302 performs coding processing and modulation processing on a downlink data signal according to a code rate and a modulation scheme decided based on Channel State Information (CSI) from each user terminal 20.

The mapping section 303 maps the downlink signal generated by the transmission signal generating section 302, on a predetermined radio resource based on the instruction from the control section 301 to output to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal and an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. When, for example, receiving the PUCCH including HARQ-ACK, the received signal processing section 304 outputs the HARQ-ACK to the control section 301. Further, the received signal processing section 304 outputs the received signal and the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

The measurement section 305 may measure, for example, received power (e.g., Reference Signal Received Power (RSRP)), received quality (e.g., Reference Signal Received Quality (RSRQ)), a Signal to Interference plus Noise Ratio (SINR)) or a channel state of the received signal. The measurement section 305 may output a measurement result to the control section 301.

### (User Terminal)

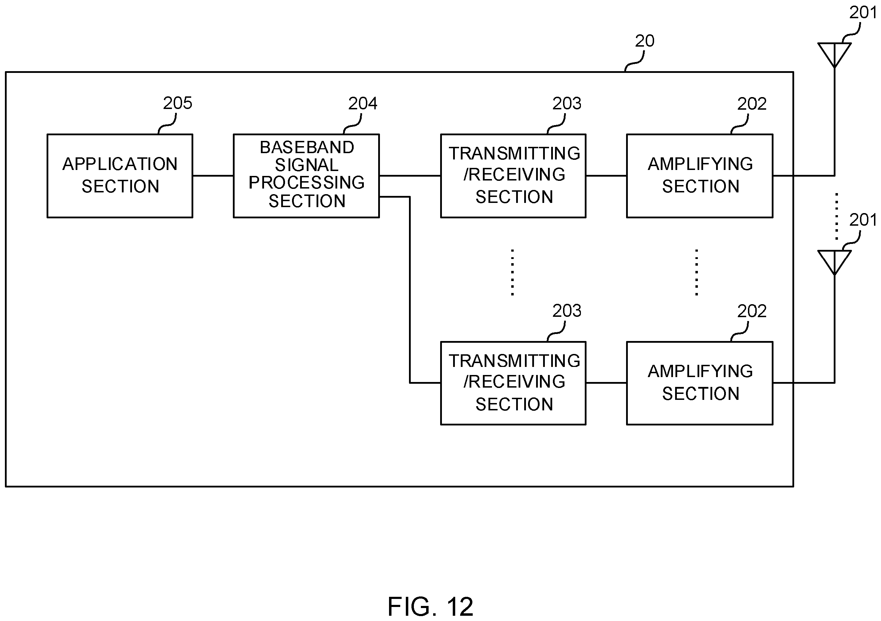

Fig. 12 is a diagram illustrating an example of an entire configuration of the user terminal according to the one embodiment of the present invention. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include the one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal to output to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding, and reception processing of retransmission control on the input baseband signal. The baseband signal processing section 204 transfers downlink user data to the application section 205. The application section 205 performs processing related to layers higher than a physical layer and a MAC layer. Further, the baseband signal processing section 204 transfers broadcast information among the downlink data, too, to the application section 205.

Meanwhile, the application section 205 inputs uplink user data to the baseband signal processing section 204. The baseband signal processing section 204 performs transmission processing of retransmission control (e.g., HARQ transmission processing), channel coding, precoding, Discrete Fourier Transform (DFT) processing and IFFT processing on the uplink user data to transfer to each transmission/reception section 203. Each transmission/reception section 203 converts the baseband signal output from the baseband signal processing section 204 into a radio frequency band to transmit. The radio frequency signal subjected to the frequency conversion by each transmission/reception section 203 is amplified by each amplifying section 202, and is transmitted from each transmission/reception antenna 201.

In addition, each transmission/reception section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Further, each transmission/reception antenna 201 can be composed of an array antenna, for example.

Each transmission/reception section 203 may transmit the SRS according to one of the above cases 1 to 3. Further, each transmission/reception section 203 may transmit information (capability information) related to the case supported by the user terminal 20 among the case 1 to the case 3. In this case, each transmission/reception section 203 may transmit the capability information (bit) according to the notification methods 1 to 3. Further, each transmission/reception section 203 may receive an SRS transmission timing decided based on the received capability information, and transmit the SRS according to this transmission timing. Furthermore, each transmission/reception section 203 may transmit at least one of the Scheduling Request (SR), the CSI (the P-CSI or the A-CSI) and the information for the random access according to the application example of the case 3.

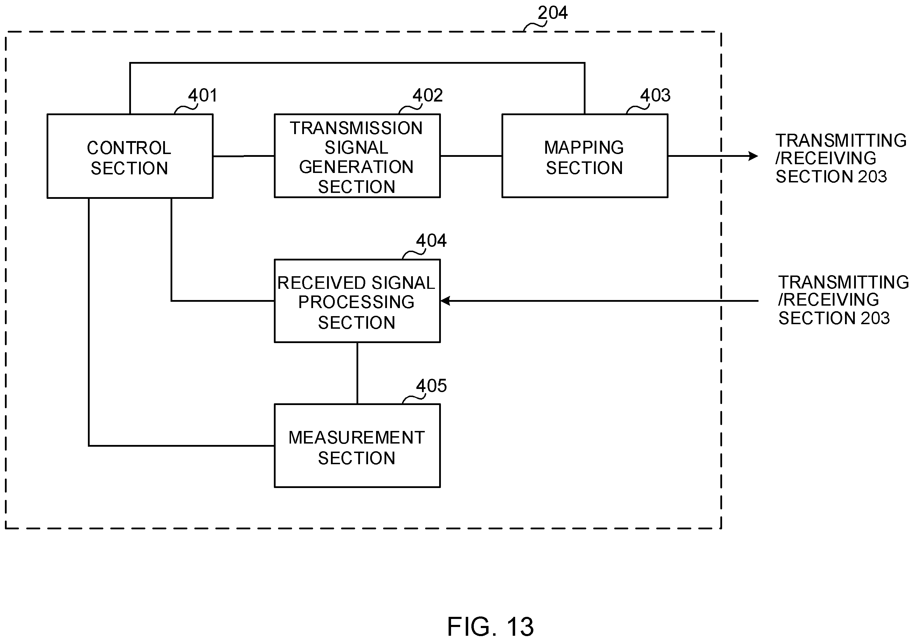

Fig. 13 is a diagram illustrating an example of a function configuration of the user terminal according to the one embodiment of the present invention. In addition, this example mainly illustrates function blocks of characteristic portions according to the present embodiment, and assumes that the user terminal 20 includes other function blocks required for radio communication, too.

The baseband signal processing section 204 of the user terminal 20 includes at least the control section 401, a transmission signal generating section 402, a mapping section 403, a received signal processing section 404 and a measurement section 405. In addition, these components may be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Further, the control section 401 controls signal reception processing of the received signal processing section 404 and signal measurement of the measurement section 405.

The control section 401 obtains, from the received signal processing section 404, downlink control signals (signals transmitted on the PDCCH/EPDCCH) and a downlink data signal (a signal transmitted on the PDSCH) transmitted from the radio base station 10. The control section 401 controls generation of an uplink control signal (e.g., transmission acknowledgement information) and an uplink data signal based on a result obtained by determining whether or not it is necessary to perform retransmission control on the downlink control signal and the downlink data signal.

The control section 401 may perform control to transmit the SRS in one of the above cases 1 to 3 according to the timing instruction decided by the radio base station. Further, the control section 401 may transmit to the radio base station apparatus in advance the information (capability information) related to the case supported by the user terminal 20 among the case 1 to the case 3.

Furthermore, the control section 401 may perform control to transmit at least one of the Scheduling Request (SR), the CSI (the P-CSI or the A-CSI) and the information for the random access via each transmission/reception section 203 according to the case 3.

The transmission signal generating section 402 generates an uplink signal (such as an uplink control signal, an uplink data signal and an uplink reference signal) based on an instruction from the control section 401 to output to the mapping section 403. The transmission signal generating section 402 can be composed of a signal generator, a signal generation circuit and a signal generating apparatus described based on the common knowledge in the technical field according to the present invention.

For example, the transmission signal generating section 402 generates an uplink control signal related to transmission acknowledgement information and Channel State Information (CSI) based on, for example, the instruction from the control section 401. Further, the transmission signal generating section 402 generates an uplink data signal based on the instruction from the control section 401. When, for example, the downlink control signal notified from the radio base station 10 includes a UL grant, the control section 401 instructs the transmission signal generating section 402 to generate an uplink data signal.

The mapping section 403 maps the uplink signal generated by the transmission signal generating section 402, on a radio resource based on the instruction from the control section 401 to output to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (a downlink control signal, a downlink data signal and a downlink reference signal) transmitted from the radio base station 10. The received signal processing section 404 can be composed of a signal processor, a signal processing circuit or a signal processing apparatus described based on the common knowledge in the technical field according to the present invention. Further, the received signal processing section 404 can compose the reception section according to the present invention.

The received signal processing section 404 outputs information decoded by the reception processing to the control section 401. The received signal processing section 404 outputs, for example, broadcast information, system information, RRC signaling and DCI to the control section 401. Further, the received signal processing section 404 outputs the received signal and the signal after the reception processing to the measurement section 405.

The measurement section 405 performs measurement related to the received signal. For example, the measurement section 405 performs measurement by using a beam forming RS transmitted from the radio base station 10. The measurement section 405 can be composed of a measurement instrument, a measurement circuit or a measurement apparatus described based on the common knowledge in the technical field according to the present invention.

The measurement section 405 may measure, for example, received power (e.g., RSRP), received quality (e.g., an RSRQ or a received SINR) or a channel state of the received signal. The measurement section 405 may output a measurement result to the control section 401.

### <Hardware Configuration>

The block diagrams used to describe the embodiment illustrate blocks in function units. These function blocks (components) are realized by an arbitrary combination of hardware and/or software. Further, means for realizing each function block is not limited in particular. That is, each function block may be realized by one physically and/or logically coupled apparatus or may be realized by a plurality of apparatuses formed by connecting two or more physically and/or logically separate apparatuses directly and/or indirectly (for example, via cables or by radio).

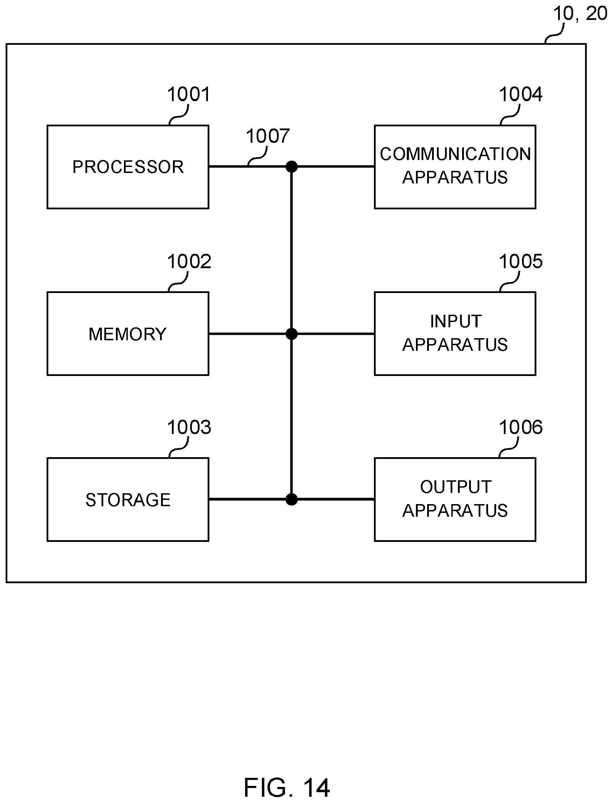

For example, the radio base station and the user terminal according to the one embodiment of the present invention may function as computers that perform processing of the radio communication method according to the present invention. Fig. 14 is a diagram illustrating an example of hardware configurations of the radio base station and the user terminal according to the one embodiment of the present invention. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 14 or may be configured without including part of the apparatuses.

For example, Fig. 14 illustrates only the one processor 1001. However, there may be a plurality of processors. Further, processing may be executed by one processor or may be executed by one or more processors concurrently, successively or by another method. In addition, the processor 1001 may be implemented by one or more chips.

Each function of the radio base station 10 and the user terminal 20 is realized by causing hardware such as the processor 1001 and the memory 1002 to read predetermined software (program), and thereby causing the processor 1001 to perform an arithmetic operation, and control communication of the communication apparatus 1004 and reading and/or writing of data in the memory 1002 and the storage 1003.

For example, the processor 1001 causes an operating system to operate to control the entire computer. The processor 1001 may be composed of a Central Processing Unit (CPU) including an interface for a peripheral apparatus, a control apparatus, an arithmetic operation apparatus and a register. For example, the baseband signal processing section 104 (204) and the call processing section 105 may be realized by the processor 1001.

Further, the processor 1001 reads programs (program codes), a software module or data from the storage 1003 and/or the communication apparatus 1004 out to the memory 1002, and executes various types of processing according to the programs, the software module or the data. Programs that cause the computer to execute at least part of the operations described in the above embodiment are used as the programs. For example, the control section 401 of the user terminal 20 may be realized by a control program stored in the memory 1002 and operated by the processor 1001 or other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the transmission/reception antennas 101 (201), the amplifying sections 102 (202), the transmission/reception sections 103 (203) and the channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may employ an integrated configuration (e.g., touch panel).

Further, each apparatus such as the processor 1001 or the memory 1002 is connected by the bus 1007 that communicates information. The bus 1007 may be composed of a single bus or may be composed of buses that are different between apparatuses.

Further, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may realize part or all of each function block. For example, the processor 1001 may be implemented by at least one of these types of hardware.

### (Modified Example)

Each term that is described in this description and/or each term that is necessary to understand this description may be replaced with terms having identical or similar meanings. For example, a channel and/or a symbol may be signals (signaling). Further, a signal may be a message. A reference signal can be also abbreviated as a RS (Reference Signal), or may be also referred to as a pilot or a pilot signal depending on standards to be applied. Furthermore, a Component Carrier (CC) may be referred to as a cell, a frequency carrier and a carrier frequency.

Still further, a radio frame may include one or a plurality of periods (frames) in a time domain. Each of one or a plurality of periods (frames) that composes a radio frame may be referred to as a subframe. Further, the subframe may include one or a plurality of slots in the time domain. Furthermore, the slot may include one or a plurality of symbols (Orthogonal Frequency Division Multiplexing (OFDM) symbols or Single Carrier Frequency Division Multiple Access (SC-FDMA) symbols) in the time domain.

All of the radio frame, the subframe, the slot and the symbol indicate time units for transmitting signals. The other corresponding names of the radio frame, the subframe, the slot and the symbol may be used. For example, one subframe may be referred to as a Transmission Time Interval (TTI). A plurality of continuous subframes may be referred to as TTIs. One slot may be referred to as a TTI. That is, the subframe or the TTI may be a subframe (1 ms) according to existing LTE, may be a period (e.g., 1 to 13 symbols) shorter than 1 ms or may be a period longer than 1 ms.

In this regard, the TTI refers to, for example, a minimum time unit for scheduling for radio communication. For example, in the LTE system, the radio base station performs scheduling for allocating radio resources (a frequency bandwidth or transmission power that can be used by each user terminal) in TTI units to each user terminal. In this regard, a definition of the TTI is not limited to this. The TTI may be a transmission time unit of a data packet (transport block) subjected to channel coding, or may be a processing unit of scheduling or link adaptation.

The TTI having 1 ms in time duration may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a reduced subframe or a short subframe.

Resource Blocks (RBs) are resource block allocation units of the time domain and the frequency domain, and may include one or a plurality of continuous subcarriers in the frequency domain. Further, the RB may include one or a plurality of symbols in the time domain or may have a length of one slot, one subframe or one TTI. One TTI or one subframe may include one or a plurality of resource blocks. In this regard, the RB may be referred to as a Physical Resource Block (PRB: Physical RB), a PRB pair or a RB pair.

Further, the resource block may include one or a plurality of Resource Elements (REs). For example, one RE may be a radio resource domain of one subcarrier and one symbol.

In this regard, structures of the radio frame, the subframe, the slot and the symbol are only exemplary structures. For example, configurations such as the number of subframes included in a radio frame, the number of slots included in a subframe, the numbers of symbols and RBs included in a slot, the number of subcarriers included in a RB, the number of symbols in a TTI, a symbol length and a Cyclic Prefix (CP) length can be variously changed.

Still further, the pieces of information and parameters described in this description may be expressed by absolute values, may be expressed by relative values with respect to predetermined values or may be expressed by other pieces of corresponding information. For example, a radio resource may be indicated by a predetermined index. Further, numerical expressions used for these parameters may be different from those explicitly disclosed in this description.

Names used for parameters in this description are by no means restrictive. For example, various channels (the Physical Uplink Control Channel (PUCCH) and the Physical Downlink Control Channel (PDCCH)) and information elements can be identified based on various suitable names. Therefore, various names allocated to these various channels and information elements are by no means restrictive.

The pieces of information and the signals described in this description may be expressed by using one of various different techniques. For example, the data, the instructions, the commands, the pieces of information, the signals, the bits, the symbols and the chips mentioned in the above entire description may be expressed as voltages, currents, electromagnetic waves, magnetic fields or magnetic particles, optical fields, photons or arbitrary combinations thereof.

Further, the pieces of information and the signals can be output from a higher layer to a lower layer and/or from the lower layer to the higher layer. The pieces of information and the signals may be input and output via a plurality of network nodes.

The input and output pieces of information and signals may be stored in a specific location (e.g., memory) or may be managed by a management table. The input and output pieces of information and signals can be overwritten, updated or additionally written. The output pieces of information and signals may be deleted. The input pieces of information and signals may be transmitted to other apparatuses.

Information may be notified not only according to the aspect/embodiment described in this description but also by other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIB) and System Information Blocks (SIB)), and Medium Access Control (MAC) signaling), other signals or combinations thereof.

In addition, the physical layer signaling may be referred to as Layer 1/Layer 2 (L1/L2) control information (L1/L2 control signal) or L1 control information (L1 control signal). Further, the RRC signaling may be referred to as an RRC message, and may be, for example, an RRC Connection Setup message or an RRC Connection Reconfiguration message. Furthermore, the MAC signaling may be notified by, for example, a MAC Control Element (MAC CE).

Still further, predetermined information (e.g., notification of "being X") may be not only explicitly notified but also implicitly notified (by, for example, not notifying this predetermined information or by notifying another information).

Determination may be performed based on a value (0 or 1) expressed by one bit, may be performed based on a boolean expressed by true or false or may be performed by comparing numerical values (e.g., comparison with predetermined value).

Irrespectively of whether software is referred to as software, firmware, middleware, a microcode or a hardware description language or as other names, the software should be widely interpreted to mean an instruction, an instruction set, a code, a code segment, a program code, a program, a subprogram, a software module, an application, a software application, a software package, a routine, a subroutine, an object, an executable file, an execution thread, a procedure or a function.

Further, software, instructions and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio technique are included in a definition of the transmission media.

The terms "system" and "network" used in this description are compatibly used.

In this description, the terms "Base Station (BS)", "radio base station", "eNB", "cell", "sector", "cell group", "carrier" and "component carrier" can be compatibly used. The base station is referred to as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each small area can provide communication service via a base station subsystem (e.g., indoor small base station (RRH: Remote Radio Head)). The term "cell" or "sector" indicates part or the entirety of the coverage area of the base station and/or the base station subsystem that provides communication service in this coverage.

In this description, the terms "Mobile Station (MS)", "user terminal", "User Equipment (UE)" and "terminal" can be compatibly used. The base station is referred to as the term such as a fixed station, a NodeB, an eNodeB (eNB), an access point, a transmission point, a reception point, a femtocell or a small cell in some cases.

A person skilled in the art calls the mobile station as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Further, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the radio base station 10. Further, words such as "uplink" and "downlink" may be read as "sides". For example, the uplink channel may be read as a side channel.

Similarly, the user terminal in this description may be read as the radio base station. In this case, the radio base station 10 may be configured to include the functions of the user terminal 20.

In this description, specific operations performed by the base station are performed by an upper node of this base station depending on cases. It is obvious that, in a network including one or a plurality of network nodes of the base stations, various operations performed to communicate with a terminal can be performed by base stations or one or more network nodes (that are, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Further, orders of the processing procedures, the sequences and the flowchart of each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are enhanced based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity and the order of these elements. These names can be used in this description as a convenient method for distinguishing between two or more elements. Hence, the reference to the first and second elements does not mean that only two elements can be employed or the first element should precede the second element in some way.

The term "determining (deciding)" used in this description includes diverse operations in some cases. For example, "determining (deciding)" may be regarded to "determine (decide)" "calculating", "computing", "processing", "deriving", "investigating", "looking up" (e.g., looking up in a table, a database or another data structure) and "ascertaining". Further, "determining (deciding)" may be regarded to "determine (decide)" "receiving" (e.g., receiving information), "transmitting" (e.g., transmitting information), "input", "output" and "accessing" (e.g., accessing data in a memory). Further, "determining (deciding)" may be regarded to "determine (decide)" "resolving", "selecting", "choosing", "establishing" and "comparing". That is, "determining (deciding)" may be regarded to "determine (decide)" some operation.

The words "connected" and "coupled" used in this description or every modification of these words can mean direct or indirect connection or coupling between two or more elements, and can include that one or more intermediate elements exist between the two elements "connected" or "coupled" with each other. The elements may be coupled or connected physically, logically or by a combination of physical and logical connections. It can be understood that, when used in this description, the two elements are "connected" or "coupled" with each other by using one or more electric wires, cables and/or printed electrical connection, and by using electromagnetic energy having wavelengths in radio frequency domains, microwave domains and (both of visible and invisible) light domains in some non-restrictive and incomprehensive examples.

When the words "including" and "comprising" and modifications of these words are used in this description and the claims, these words intend to be comprehensive similar to the word "have". Further, the word "or" used in this description and the claims intends not to be exclusive OR.

The present invention has been described in detail above, yet it is obvious for a person skilled in the art that the present invention is not limited to the embodiment described in this description. The present invention can be carried out as modified and changed aspects without departing from the scope of the present invention defined by the recitation of the claims. Accordingly, the disclosure of this description intends for illustrative explanation, and does not have any restrictive meaning to the present invention.

This application claims priority to Japanese Patent Application No. 2016-094827 filed on May 10, 2016.

## Claims

1. A terminal (20) supporting downlink carrier aggregation and not supporting concurrent transmission of uplink signals including Sounding Reference Signal, SRS, transmission in a plurality of component carriers, the terminal (20) comprising:
a transmission section (203) configured to transmit an SRS; and
a control section (401) configured to control switching between a first carrier on a first band and a second carrier on a second band which is different from the first band to transmit the SRS,
wherein Time Division Duplex is applied by the terminal (20) to the first carrier and the second carrier,
wherein the transmission section (203) is configured to transmit, as capability information of the terminal (20), at least one of:
information indicating supporting an SRS carrier based switching operation comprising performing uplink transmission in a first subframe of the first carrier, switching from the first carrier to the second carrier, transmitting the SRS in a last symbol of the first subframe and switching to the first carrier again to perform uplink transmission in a next subframe; and
information indicating supporting an SRS carrier based switching operation comprising transmission of the SRS in the second carrier, during downlink reception in the first carrier, and
wherein the first carrier is a PCell and the second carrier is a SCell.

2. The terminal (20) according to claim 1, wherein the transmission section (203) is configured to transmit the capability information per combination of the first carrier and the second carrier.

3. A base station (10) comprising:
a reception section (103) configured to receive a Sounding Reference Signal, SRS, that is switched between a first carrier on a first band and a second carrier on a second band which is different from the first band; and
a control section (401) configured to acquire, as capability information of a terminal (20) supporting downlink carrier aggregation and not supporting concurrent transmission of uplink signals including SRS transmission in a plurality of component carriers, at least one of:
information indicating supporting an SRS carrier based switching operation comprising performing uplink transmission in a first subframe of the first carrier, switching from the first carrier to the second carrier, transmitting the SRS in a last symbol of the first subframe and switching to the first carrier again to perform uplink transmission in a next subframe; and
information indicating supporting an SRS carrier based switching operation comprising transmission of the SRS in the second carrier, during downlink reception in the first carrier, via the reception section (103),
wherein the reception section (103) is configured to receive the SRS via the second carrier, wherein Time Division Duplex is applied by the terminal (20) to the first carrier and the second carrier, and
wherein the first carrier is a PCell and the second carrier is a SCell.

4. A radio communication method for a terminal (20) supporting downlink carrier aggregation and not supporting concurrent transmission of uplink signals including Sounding Reference Signal, SRS, transmission in a plurality of component carriers, comprising:
transmitting an SRS; and
controlling switching between a first carrier on a first band and a second carrier on a second band which is different from the first band, to transmit the SRS,
wherein the transmitting transmits, as capability information of the terminal (20), at least one of:
information indicating supporting an SRS carrier based switching operation comprising performing uplink transmission in a first subframe of the first carrier, switching from the first carrier to the second carrier, transmitting the SRS in a last symbol of the first subframe and switching to the first carrier again to perform uplink transmission in a next subframe; and
information indicating supporting an SRS carrier based switching operation comprising transmission of the SRS in the second carrier, during downlink reception in the first carrier,
wherein Time Division Duplex is applied by the terminal (20) to the first carrier and the second carrier, and
wherein the first carrier is a PCell and the second carrier is a SCell.

5. A system comprising a terminal (20) according to claim 1 or 2 and a base station (10) according to claim 3.

## Patentansprüche

1. Endgerät (20), das die Downlink-Trägeraggregation unterstützt und eine gleichzeitige Übertragung von Uplink-Signalen nicht unterstützt, einschließlich der Übertragung eines akustischen Referenzsignals, SRS, in einer Vielzahl von Komponententrägern, wobei das Endgerät (20) Folgendes umfasst:
einen Übertragungsabschnitt (203), der ausgebildet ist, um ein SRS zu übertragen; und
einen Steuerabschnitt (401), der ausgebildet ist, um das Umschalten zwischen einem ersten Träger auf einem ersten Band und einem zweiten Träger auf einem zweiten Band, das sich von dem ersten Band unterscheidet, zu steuern, um das SRS zu übertragen,
wobei das Endgerät (20) auf den ersten Träger und den zweiten Träger ein Zeitduplexverfahren anwendet,
wobei der Übertragungsabschnitt (203) ausgebildet ist, um mindestens eines der Folgenden als Kapazitätsinformationen des Endgeräts (20) zu übertragen:
Informationen, die angeben, dass eine trägerbasierte SRS-Umschaltoperation unterstützt wird, die das Durchführen einer Uplink-Übertragung in einem ersten Teilrahmen des ersten Trägers, das Umschalten vom ersten Träger auf den zweiten Träger, das Übertragen des ersten SRS in einem letzten Symbol des ersten Teilrahmens und das erneute Umschalten auf den ersten Träger umfasst, um eine Uplink-Übertragung in einem nächsten Teilrahmen durchzuführen; und
Informationen, die angeben, dass eine trägerbasierte SRS-Umschaltoperation, umfassend die Übertragung des SRS in dem zweiten Träger, während des Downlink-Empfangs in dem ersten Träger unterstützt wird, und
wobei es sich bei dem ersten Träger um eine PCell und bei dem zweiten Träger um eine SCell handelt.

2. Endgerät (20) nach Anspruch 1, wobei der Übertragungsabschnitt (203) so ausgebildet ist, dass er die Kapazitätsinformationen pro Kombination aus dem ersten Träger und dem zweiten Träger überträgt.

3. Basisstation (10), umfassend:
einen Empfangsabschnitt (103), der ausgebildet ist, um ein akustisches Referenzsignal, SRS, zu empfangen, das zwischen einem ersten Träger auf einem ersten Band und einem zweiten Träger auf einem zweiten Band, das sich von dem ersten Band unterscheidet, umgeschaltet wird; und
einen Steuerabschnitt (401), der ausgebildet ist, um als Kapazitätsinformationen eines Endgeräts (20), das die Downlink-Trägeraggregation unterstützt und eine gleichzeitige Übertragung von Uplink-Signalen nicht unterstützt, einschließlich der SRS-Übertragung in einer Vielzahl von Komponententrägern, die mindestens eines der Folgenden zu erfassen:
Informationen, die angeben, dass eine trägerbasierte SRS-Umschaltoperation unterstützt wird, die das Durchführen einer Uplink-Übertragung in einem ersten Teilrahmen des ersten Trägers, das Umschalten vom ersten Träger auf den zweiten Träger, das Übertragen des ersten SRS in einem letzten Symbol des ersten Teilrahmens und das erneute Umschalten auf den ersten Träger umfasst, um eine Uplink-Übertragung in einem nächsten Teilrahmen durchzuführen; und
Informationen, die angeben, dass eine trägerbasierte SRS-Umschaltoperation, umfassend die Übertragung des SRS in dem zweiten Träger, während des Downlink-Empfangs in dem ersten Träger, über den Empfangsabschnitt (103) unterstützt wird,
wobei der Empfangsabschnitt (103) ausgebildet ist, um das SRS über den zweiten Träger zu empfangen, wobei das Endgerät (20) auf den ersten Träger und den zweiten Träger ein Zeitduplexverfahren anwendet, und
wobei es sich bei dem ersten Träger um eine PCell und bei dem zweiten Träger um eine SCell handelt.

4. Funkübertragungsverfahren für ein Endgerät (20), das die Downlink-Trägeraggregation unterstützt und eine gleichzeitige Übertragung von Uplink-Signalen nicht unterstützt, einschließlich der Übertragung eines akustischen Referenzsignals, SRS, in einer Vielzahl von Komponententrägern, umfassend:
Übertragen eines SRS; und
Steuern der Umschaltung zwischen einem ersten Träger auf einem ersten Band und einem zweiten Träger auf einem zweiten Band, das sich vom ersten Band unterscheidet, um das SRS zu übertragen,
wobei während der Übertragung mindestens eines der Folgenden als Kapazitätsinformationen des Endgeräts (20) übertragen wird:
Informationen, die angeben, dass eine trägerbasierte SRS-Umschaltoperation unterstützt wird, die das Durchführen einer Uplink-Übertragung in einem ersten Teilrahmen des ersten Trägers, das Umschalten vom ersten Träger auf den zweiten Träger, das Übertragen des ersten SRS in einem letzten Symbol des ersten Teilrahmens und das erneute Umschalten auf den ersten Träger umfasst, um eine Uplink-Übertragung in einem nächsten Teilrahmen durchzuführen: und
Informationen, die angeben, dass eine trägerbasierte SRS-Umschaltoperation, umfassend die Übertragung des SRS in dem zweiten Träger, während des Downlink-Empfangs in dem ersten Träger unterstützt wird,
wobei das Endgerät (20) auf den ersten Träger und auf den zweiten Träger ein Zeitduplexverfahren anwendet, und
wobei es sich bei dem ersten Träger um eine PCell und bei dem zweiten Träger um eine SCell handelt.

5. System, umfassend ein Endgerät (20) nach Anspruch 1 oder 2 und eine Basisstation (10) nach Anspruch 3.

## Revendications

1. Terminal (20) supportant une agrégation de porteuses en liaison descendante et ne supportant pas une transmission simultanée de signaux en liaison montante incluant la transmission d'un signal de référence sonore, SRS, dans une pluralité de porteuses composantes, le terminal (20) comprenant :
une section de transmission (203) configurée de manière à transmettre un SRS ; et
une section de commande (401) configurée de manière à commander la commutation entre une première porteuse sur une première bande et une seconde porteuse sur une seconde bande qui est différente de la première bande pour transmettre le SRS,
dans lequel un duplexage par séparation temporelle est appliqué par le terminal (20) à la première porteuse et à la seconde porteuse,
dans lequel la section de transmission (203) est configurée de manière à transmettre, en tant qu'informations de capacité du terminal (20), au moins une parmi :
des informations indiquant la prise en charge d'une opération de commutation basée sur la porteuse de SRS comprenant l'exécution d'une transmission en liaison montante dans une première sous-trame de la première porteuse, la commutation de la première porteuse vers la seconde porteuse, la transmission du SRS dans un dernier symbole de la première sous-trame et la commutation vers la première porteuse à nouveau pour exécuter une transmission en liaison montante dans une sous-trame suivante ; et
des informations indiquant la prise en charge d'une opération de commutation basée sur la porteuse de SRS comprenant la transmission du SRS sur la seconde porteuse, pendant la réception en liaison descendante sur la première porteuse, et
dans lequel la première porteuse est une cellule primaire et la seconde porteuse est une cellule secondaire.

2. Terminal (20) selon la revendication 1, dans lequel la section de transmission (203) est configurée de manière à transmettre les informations de capacité par combinaison de la première porteuse et de la seconde porteuse.

3. Station de base (10) comprenant :
une section de réception (103) configurée de manière à recevoir un signal de référence sonore, SRS, qui est commuté entre une première porteuse sur une première bande et une seconde porteuse sur une seconde bande différente de la première bande ; et
une section de commande (401) configurée de manière à acquérir, en tant qu'informations de capacité d'un terminal (20) prenant en charge une agrégation de porteuses en liaison descendante et ne prenant pas en charge une transmission simultanée de signaux en liaison montante incluant la transmission d'un SRS dans une pluralité de porteuses composantes, d'au moins une parmi :
des informations indiquant la prise en charge d'une opération de commutation basée sur la porteuse de SRS comprenant l'exécution d'une transmission en liaison montante dans une première sous-trame de la première porteuse, la commutation de la première porteuse vers la seconde porteuse, la transmission du SRS dans un dernier symbole de la première sous-trame et la commutation vers la première porteuse à nouveau pour exécuter une transmission en liaison montante dans une sous-trame suivante ; et
des informations indiquant la prise en charge d'une opération de commutation basée sur la porteuse de SRS comprenant la transmission du SRS sur la seconde porteuse, pendant la réception en liaison descendante sur la première porteuse, par l'intermédiaire de la section de réception (103),
dans laquelle la section de réception (103) est configurée de manière à recevoir le SRS par l'intermédiaire de la seconde porteuse, dans laquelle un duplexage par séparation temporelle est appliqué par le terminal (20) à la première porteuse et à la seconde porteuse,
dans laquelle la première porteuse est une cellule primaire et la seconde porteuse est une cellule secondaire.

4. Procédé de radiocommunication pour un terminal (20) prenant en charge l'agrégation de porteuses en liaison descendante et ne prenant pas en charge une transmission simultanée de signaux en liaison montante incluant la transmission d'un signal de référence sonore, SRS, dans une pluralité de porteuses composantes, comprenant :
la transmission d'un SRS ; et
la commande d'une commutation entre une première porteuse sur une première bande et une seconde porteuse sur une seconde bande différente de la première, pour transmettre le SRS,
dans lequel la transmission transmet, en tant qu'informations de capacité du terminal (20), au moins une parmi :
des informations indiquant la prise en charge d'une opération de commutation basée sur la porteuse de SRS comprenant l'exécution d'une transmission en liaison montante dans une première sous-trame de la première porteuse, la commutation de la première porteuse vers la seconde porteuse, la transmission du SRS dans un dernier symbole de la première sous-trame et la commutation vers la première porteuse à nouveau pour exécuter une transmission en liaison montante dans une sous-trame suivante ; et
des informations indiquant la prise en charge d'une opération de commutation basée sur la porteuse de SRS comprenant la transmission du SRS sur la seconde porteuse, pendant la réception en liaison descendante sur la première porteuse,
dans lequel un duplexage par répartition dans le temps est appliqué à la première porteuse et à la seconde porteuse par le terminal (20), et
dans lequel la première porteuse est une cellule primaire et la seconde porteuse est une cellule secondaire.

5. Système comprenant un terminal (20) selon la revendication 1 ou la revendication 2 et une station de base (10) selon la revendication 3.
